Europäisches Patentamt

European Patent Office

Office européen des brevets

(11) Publication number: **0 106 482**
**B1**

# EUROPEAN PATENT SPECIFICATION

(45) Date of publication of patent specification: **06.08.86**

(51) Int. Cl.⁴: **H 05 G 1/20,** H 02 M 7/10

(21) Application number: **83305089.1**

(22) Date of filing: **02.09.83**

(54) **High tension DC voltage generating apparatus.**

(30) Priority: **08.09.82 JP 156171/82**

(43) Date of publication of application:
**25.04.84 Bulletin 84/17**

(45) Publication of the grant of the patent:
**06.08.86 Bulletin 86/32**

(84) Designated Contracting States:
**DE FR NL**

(56) References cited:
**US-A-3 419 786**

**Patent Abstracts of Japan vol. 6, no. 140, 29 July 1982 & JP-A-57-65272**

(73) Proprietor: **Kabushiki Kaisha Toshiba
72, Horikawa-cho Saiwai-ku
Kawasaki-shi Kanagawa-ken 210 (JP)**

(72) Inventor: **Onodera, Toshihiro
155-2, Yaho
Kunitachi-shi Tokyo (JP)**
Inventor: **Masuda, Youichi
34-402, Kachida-danchi 266-1, Kachida-cho
Kohoku-ku Yokohama-shi (JP)**

(74) Representative: **Freed, Arthur Woolf et al
MARKS & CLERK 57-60 Lincoln's Inn Fields
London WC2A 3LS (GB)**

## Description

This invention relates to a high tension DC voltage generating apparatus, and more particularly to a high tension DC voltage generating apparatus suitable for the supply of high tension DC voltage to an X-ray emitting apparatus.

In general, a high tension DC voltage generating apparatus for supplying a high tension DC voltage to an X-ray emitting apparatus contains a transformer by which a commercial AC voltage or an AC voltage of several hundred Hz is stepped up to a 50 to 400 KV high tension voltage and a rectifier circuit by which the stepped up high tension AC voltage is converted into a high tension DC voltage. This high tension DC voltage is applied between the anode and the cathode of the X-ray tube of the X-ray emitting apparatus through a high voltage cable. In general, the transformer can be made smaller in size when a high frequency power is supplied thereto. Therefore, an AC power supply source which includes a high frequency inverter which inverts a DC voltage to an AC voltage is used for the transformer. However, since the transformer has a magnetic core made of a silicon steel plate, the cutoff frequency thereof is limited to a maximum of several hundred Hz. In order to increase the cutoff frequency of this transformer to more than several hundred Hz, in a home use television set, the secondary winding of the transformer is divided into several windings and the secondary windings are connected in series with diodes inserted therebetween to obtain a required high tension voltage. Since such a high tension voltage generating apparatus allows a distributed capacitance of a transformer viewed from the primary winding side of the transformer and leakage inductance well to be decreased, the cutoff frequency of the transformer can be increased. The high tension DC voltage generating apparatus employed in the home use television set is so arranged that the DC voltage is obtained by rectifying the AC voltage by the diodes. Therefore, this DC generating apparatus can not be used for the X-ray emitting apparatus for the following reasons. The level of the DC voltage to be applied to the X-ray tube of the X-ray emitting apparatus must be at least 10 times that applied to the Braun tube of the television set. This results in the increase of the number of the secondary windings of the transformer and the number of diodes coupled to the secondary windings as well. The Braun tube of the television set serves as a light load for a DC voltage source and the capacitance of the anode of the Braun tube is great. Therefore, a peak value of the half wave rectified voltage is supplied to the anode of the Braun tube as a DC voltage. Accordingly, a half wave rectifier system can be adopted for the rectifier circuit in the home use television receiver. However, in the high tension DC voltage generating apparatus for applying a high DC voltage to the X-ray tube, the load capacity of the X-ray tube is approximately 1,000 times that of the Braun tube. As a result, the sum of the anode capacitance of the X-ray tube and the capacitance of the high tension cable for transmitting the rectified power is not sufficient to keep the half wave rectified voltage at the peak value thereof. For this reason, the AC voltage of each of the secondary windings of the transformer must be full-wave rectified with those rectified DC voltages are added together to obtain a desired high tension voltage.

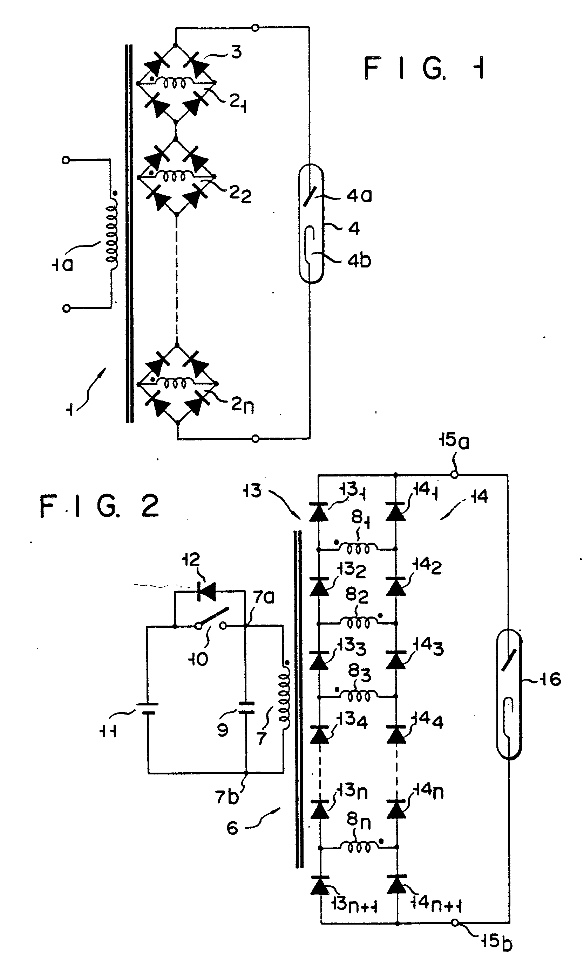

Fig. 1 shows an example of a conventional high tension DC voltage generating apparatus suitable for the supply of the DC high tension voltage to the X-ray tube. In Fig. 1, an AC voltage at a given frequency is applied across the input terminals of the primary winding 1a. This transformer 1 has $n$ secondary windings $2_1, 2_2, \ldots, 2_n$. The symbol "." indicates the polarity of each winding at a time point. Each secondary winding is connected with four diodes with the polarity as shown. The DC voltages each obtained by the combination of one secondary winding and the associated four diodes 3, are combined to provide a desired high tension DC voltage for application between the anode 4a and cathode 4b of the X-ray tube 4.

The high tension DC voltage generating apparatus shown in Fig. 1, however, has the following defects. Four diodes are used for each secondary winding, so that a great number of diodes are required for constructing the apparatus. Further, it makes the arrangement of the rectifier circuit complicated as a whole.

US—A—3 419 786 discloses a high tension DC voltage generating apparatus comprising a transformer having a primary winding connected to an AC power supply source and a plurality of secondary windings. A first rectifier circuit has a plurality of rectifier elements connected in series in the same direction of polarity. A second rectifier circuit has a plurality of rectifier elements connected in the same manner and direction as the plurality of rectifier elements of the first rectifier circuit. The plurality of rectifier elements in the first and second rectifier circuits are correspondingly arranged one-to-one to form rectifier element pairs of a first (n+1)th stages. A positive load terminal is connected to the cathodes of the rectifier element pair of the first stage. A negative load terminal is connected to the anodes of the rectifier element pair of the (n+1)th stage. Each of the secondary windings is connected between the anodes of a corresponding rectifier element pair except between the rectifier element pair of the (n+1)th stage with the polarities of the secondary windings being reversed alternately.

An object of the present invention is to provide an improved high tension DC voltage generating apparatus which can provide full-wave rectified DC voltage from each of the secondary windings of a transformer, and supply a desired high tension DC voltage to a load with a high load capacity.

According to the present invention, there is provided a high tension DC voltage generating apparatus comprising:

a transformer having a primary winding connected to an AC power supply source and a plurality of n secondary windings;

a first rectifier circuit having a plurality of rectifier elements connected in series in the same direction of polarity;

a second rectifier circuit having a plurality of rectifier elements connected in the same manner and direction as the plurality of rectifier elements in said first rectifier circuit, the plurality of rectifier elements in said first and second rectifier circuits being correspondingly arranged one-to-one to form rectifier element pairs of a first to (n+1)th stages;

a positive load terminal connected to the cathodes of the rectifier element pair of said first stage; and

a negative load terminal connected to the anodes of the rectifier element pair of said (n+1)th stage;

each of said secondary windings being connected between the anodes of a corresponding rectifier element pair except between the rectifier element pair of said (n+1)th stage, with polarities alternately reversed;

characterised in that said AC power supply source comprises a DC power supply source connected at one end to one end of said primary winding through a switching element which is periodically turned on and off, and at the other end to the other end of said primary winding;

a resonant capacitor connected across said primary winding; and

a dumper diode connected at the anode to said one end of said primary winding and at the cathode to said one end of said DC power supply source.

This invention can be more fully understood from the following detailed description when taken in conjunction with the accompanying drawings, in which:—

Fig. 1 shows a connection diagram of a conventional high tension DC voltage generating apparatus in conjunction with an X-ray tube;

Fig. 2 shows a connection diagram of a high tension DC voltage generating apparatus according to this invention, when it is applied to an X-ray tube; and

Fig. 3 shows waveforms useful in explaining the operation of the AC power supply source in Fig. 2.

As shown in Fig. 2, a transformer 6 contains a primary winding 7 and a plurality of secondary windings $8_1, 8_2, \ldots, 8_n$. The black dots attached to the windings indicates the voltage polarity induced in the windings at a given time. A DC power supply source 11 is connected between the terminals 7a and 7b of the primary winding through a switching element 10 and a resonant capacitor 9 is connected across the input terminals 7a and 7b. A dumper diode 12, connected at the cathode to one end of the DC power supply source 11, is connected between the terminals of the switching element 10. The resonant capacitor 9, the switching element 10 and the damper diode 12 cooperatively form a voltage resonant type single ended switching circuit. Specifically, this switching circuit applies an AC voltage between the input terminals 7a and 7b of the primary winding 7 by being opened and closed periodically. The characteristic impedance $Z_0 = \sqrt{L/C}$ is preferably set to a value between 0.5 ohms and 500 ohms, when the inductance of the primary winding 7 and the capacitance of the capacitor 9 are denoted by L and C, respectively. Further, the ratio $T_{on}/T$ of the turn on period $T_{on}$ to one cycle switching period T of the switching element 10 is set to a value between 0.05 and 0.5. The high tension DC voltage generating apparatus of this invention further contains a first rectifier circuit 13 having a plurality of rectifier elements such as diodes $13_1$—$13_{n+1}$, connected in series between positive and negative load terminals 15a and 15b in the same direction of polarity and a second rectifier circuit 14 having a plurality of diodes $14_1$—$14_{n+1}$ also connected in the same manner and direction as those of the first rectifier circuit. Those diodes $13_1$—$13_{n+1}$ and $14_1$—$14_{n+1}$ in the first and second rectifier circuits 13 and 14 are correspondingly arranged to form diode pairs $13_1$ and $14_1$—$13_{n+1}$ and $14_{n+1}$ corresponding to a first to (n+1)th stages. The diode pair $13_1$ and $14_1$ of the first stage are connected at the cathodes to the positive load terminal 15a. The diode pair $13_{n+1}$ and $14_{n+1}$ of the (n+1)th stage are connected at the anodes to the negative load terminal 15b. A first secondary winding $8_1$ connects the anodes of the diode pair $13_1$ and $14_1$ of the first stage. A second secondary winding $8_2$ connects the anodes of the diode pair $13_2$ and $14_2$ of the second stage, with an opposite polarity to that of the first secondary winding $8_1$. Further, a third secondary winding $8_3$ connects the anodes of the diode pair $13_3$ and $14_3$ of the third stage with a polarity which is opposite to that of the secondary winding $8_2$ but is the same as that of the first secondary winding $8_1$. In this way, the subsequent secondary windings connect the anodes of the corresponding diode pairs respectively. The n th secondary winding $8_n$ connects the anodes of the diode pair $13_n$ and $14_n$ of the n th stage. The polarities of the first to n th secondary windings $8_1$ to $8_n$ are alternately reversed in succession. An X-ray tube 16, serving as a load for the first and second rectifier circuits 13 and 14, is connected at the anode to the positive load terminal 15a and at the cathode to the negative load terminal 15b.

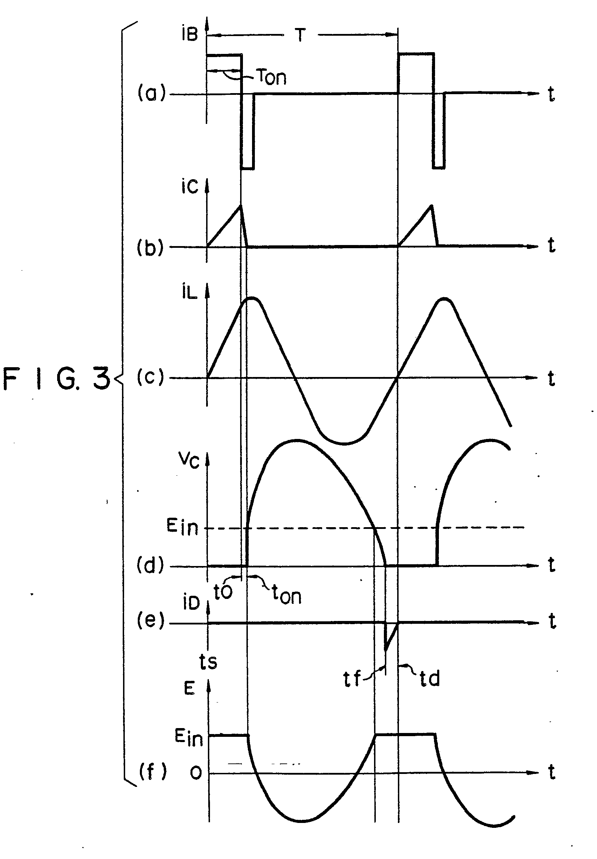

The operation of the AC power supply source of Fig. 2 will be described referring to waveform diagram of Fig. 3.

When a switching pulse as shown in Fig. 3(a) is applied to a control terminal of switching element 10, switching element 10 is periodically turned on. Since ON resistance of switching element 10 is selected to be sufficiently smaller than the impedance of primary winding 7, current $i_c$ flows through primary winding 7 and switching element 10 during the ON state of switching element 10 which, as shown in Fig. 3b, linearly increases from $t_s$ to $t_o$. Switching element 10 is forcibly turned off during a short period between $t_o$ to $t_{on}$ so that the current $i_c$ rapidly decays to zero. After the current $i_c$ becomes zero, current $i_L$ of primary winding 7 still continues its flow into resonant capacitor 9 and a stray capacitor of the switching element 10, as shown in Fig. 3(c), due to inertia of the primary winding 7. Because resonant capacitor 9 has a larger capacitance than the stray capacitance the current flows mainly through the resonsant capacitor 9. Thereafter, the resonant current, changing with cosine curve, flows through primary winding 7 during a period $t_{on}$ to $t_d$, as shown in Fig. 3(c). On the other hand, the voltage $V_c$ across switching element 10, rises the moment the resonant current starts to flow through the resonant capacitor 9, while tracing sine curve during a period $t_{on}$ to $t_f$, as shown in Fig. 3(d). The rising slope of the voltage $\dot{V}_c$ is more gentle than that in the absence of resonant capacitor 9. Therefore, at a point of time $t = t_o$ when switching element 10 is turned off, the waveform of the current $i_c$ flowing through switching element 10 never overlaps with the waveform of the voltage $V_c$ across the switching element 10. Even if those waveforms overlaps each other, the overlapping area of the waveforms will be fairly small because the rising slope of the voltage $V_c$ is gentle as mentioned above. In other words, the power dissipation of the switching element is remarkably reduced.

After time $t_f$, the voltage $V_c$ will go negative but it is kept zero since damper diode 12 conducts. The damper current $i_D$ decreasingly flows during a period $t_f$ to $t_d$, as shown in Fig. 3(e). At time point $t_d$, the next succeeding switching pulse is applied to switching element 10, so that the above-mentioned operation is repeated. During the period in which the damper current $i_D$ flows, the voltage $V_c$ across switching element 10 is zero and therefore the waveforms $i_c$ and $V_c$ never overlap each other at the time point $t_d$ that switching element 10 is subsequently turned on.

The AC voltage which is applied across the terminals 7a and 7b is obtained by subtracting the input voltage $E_{in}$ from the voltage $V_c$ across the switching element 10 as shown in Fig. 3(f).

During the period that a positive voltage is applied to the terminal 7a of the primary winding 7, that is, the period when a positive voltage is applied to the black dotted terminals of the secondary windings, those diodes $13_{n+1}$, $14_n$, ..., $14_4$, $13_3$, $14_2$ and $13_1$ forwardly biased by the positive voltage applied, rectify the voltages in the secondary windings. And the rectified voltages are summed and the summed total is applied as a desired high tension DC voltage across the load terminals 15a and 15b. During the period that a negative voltage is applied to the primary winding 7, positive voltages are induced in the non-black dotted terminals of the secondary windings. The positive induced voltages forwardly bias the diode $14_{n+1}$, $13_n$, ..., $13_4$, $14_3$, $13_2$ and $14_1$ to rectify the voltages in the secondary windings. The rectified voltages are combined to form a high tension DC voltage which in turn is applied between the load terminals 15a and 15b. The voltages induced in the secondary windings are full-wave rectified by a couple of diodes.

As described above, according to the present invention, by merely coupling a couple of diodes with each of the secondary windings, the voltages in the secondary windings can be full-wave rectified respectively. Therefore, the number of the diodes is considerably reduced, and further, the wiring means of the rectifier circuits is considerably simplified, when compared with the prior air which uses four diodes for each secondary winding. The fact leads to low cost manufacture and high reliability of the high tension DC voltage generating apparatus. The circuit arrangement according to this invention allows the number of the secondary windings to be readily increased for increasing the output DC voltage. Further, a high tension DC voltage having a predetermined peak value can be applied to a load without using the capacitance associated with the load and the high tension cable since the high tension D voltage has the full wave rectified wave form. For the above reasons, the high tension DC voltage generating apparatus according to the present invention is suitable for driving an X-ray tube.

It was empirically proved that the apparatus has a better rise characteristic of the high tension DC voltage applied between the positive and negative load terminals 15a and 15b than the prior apparatus of Fig. 1. This indicates that the apparatus according to the present invention can supply a high electrical energy to an X-ray tube for a shorter period. This feature implies that the apparatus according to the invention is well suitable for driving un X-ray tube which is turned on and off 20 times or more per second.

It is essential to use an AC power supply source with the voltage resonant type single ended switching circuit as shown in Fig. 2, for the reason that the switching circuit can cause the transformer 6 to be made small in size owing to a less switching loss and a high frequency signal having several KHz to 20 KHz to be transmitted therethrough with good efficiency. In a conventional single ended switching circuit, only an output having a single polarity can be obtained from the switching circuit. In this case, even if the conventional single ended switching circuit is coupled to a transformer which is coupled at the secondary side thereof to a full wave rectifier, the full wave rectifier operates only when the output from the switching circuit has the above-mentioned single polarity. In the voltage resonant type single ended switching circuit, an output having positive and negative polarities is obtained by utilizing an electrical energy stored in the primary winding of the transformer and in the resonant capacitor. Thus, the high tension DC voltage generating apparatus including a voltage resonant type single ended switching circuit connected to a transformer and a full wave rectifier circuit connected to the transformer can elevate the transmission efficiency of a power about twice times that of the conventional high tension DC voltage generating apparatus.

**Claims**

1. A high tension DC voltage generating apparatus comprising:

a transformer (6) having a primary winding (7) connected to an AC power supply source and a plurality of n secondary windings ($8_1$—$8_n$);

a first rectifier circuit (13) having a plurality of rectifier elements ($13_1$—$13_{n+1}$) connected in series in the same direction of polarity; .

a second rectifier circuit (14) having a plurality of rectifier elements ($14_1$—$14_{n+1}$) connected in the same manner and direction as the plurality of rectifier elements in said first rectifier circuit, the plurality of rectifier elements in said first and second rectifier circuits being correspondingly arranged one-to-one to form rectifier element pairs ($13_1$ and $14_1$, . . . , $13_{n+1}$ and $14_{n+1}$) of a first to (n+1)th stages;

a positive load terminal (15a) connected to the cathodes of the rectifier element pair ($13_1$ and $14_1$) of said first stage; and

a negative load terminal (15b) connected to the anodes of the rectifier element (pair ($13_{n+1}$ and $14_{n+1}$) of said (n+1)th stage;

each of said secondary windings being connected between the anodes of a corresponding rectifier element pair except between the rectifier element pair of said (n+1)th stage, with polarities alternately reversed;

characterised in that said AC power supply source comprises a DC power supply source (11) connected at one end to one end (7a) of said primary winding (7) through a switching element (10) which is periodically turned on and off, and at the other end to the other end (7b) of said primary winding (7); a resonant capacitor (9) connected across said primary winding; and a damper diode (12) connected at the anode to said one end (7a) of said primary winding and at the cathode to said one end of said DC power supply source.

2. A high tension DC voltage generating apparatus according to claim 1, characterised in that a characteristic impedance ranges from 0.5 to 500 ohms, said characteristic impedance ($Z_0$) being defined to be equal to the square root of a ratio (L/C) of the inductance (L) of said primary winding (7) to the capacitor (C) of said resonant capacitor (9); and in that the ratio of the turn on period ($T_{on}$) to one cycle of the switching period (T) of said switching element (10) ranges from 0.05 to 0.5.

3. A high tension DC voltage generating apparatus according to claim 1 or 2, characterised in that said positive and negative load terminals (15a, 15b) are connected to the anode and cathode terminals of an X-ray tube, respectively.

**Patentansprüche**

1. Gerät zur Erzeugung einen hohen Gleichspannung mit

einem Transformator (6) mit einer an eine Wechselspannungsquelle angeschlossenen Primärwicklung (7) und n Sekundärwicklungen ($8_1$—$8_n$),

einer ersten Gleichrichterschaltung (13) mit mehreren, in gleicher Polaritätsrichtung in Reihe geschalteten Gleichreichterelementen ($13_1$—$13_{n+1}$),

einer zweiten Gleichrichterschaltung (14) mit mehreren Gleichrichterelementen ($14_1$—$14_{n+1}$),

die in gleicher Weise und Richtung wie die mehreren Gleichrichterelemente der ersten Gleichrichterschaltung verbunden sind, wobei der mehreren Gleichrichterelemente in der ersten und der zweiten Gleichrichter-schaltung entsprechend zueinander angeordnet sind, um Gleichrichterelementpaare ($13_1$ und $14_1$, . . . . $13_{n+1}$ und $14_{n+1}$) von einer ersten bis zu einer (n+1)-ten Stufe zu bilden,

einem an die Kathoden des Gleichrichterelementpaaries ($13_1$ und $14_1$) der ersten Stufe angeschlossenen positiven Lastanschluß (15a) und

einem an die Anoden des Gleichrichterelementpaares ($13_{n+1}$ und $14_{n+1}$) der (n+1)-ten Stufe angeschlossenen negativen Lastanschluß (16b),

wobei jede der Sekundärwicklungen zwischen den Anoden eines entsprechenden Gleichrichterelementpaares mit Ausnahme zwischen dem Gleichrichterelementpaar der (n+1)-ten Stufe mit. abwechselnd umgekehrten Polaritäten angeschossen ist,

dadurch gekennzeichnet,

daß die Wechselstromquelle eine Gleichstromquelle (11), die an einem Ende an ein Ende (7a) der Primärwicklung (7) über ein periodisch ein- und ausschaltbares Schaltelement (10) und am anderen Ende an das andere Ende (7b) der Primärwicklung (7) angeschlossen ist, einen über der Primärwicklung liegenden Resonanzkondensator (9) und eine an ihrer Anode an das eine Ende (7a) der Primärwicklung und an ihrer Kathode an das eine Ende der Gleichstromquelle angeschlossene Dämpfungs- oder Zeilendiode aufweist.

2. Gerät zur Erzeugung einer hohen Gleichspannung nach Anspruch 1, dadurch gekennzeichnet, daß eine charakteristische Impedanz zwischen 0,5 und 500 Ohm liegt, daß die charakteristische Impedanz ($Z_0$) als die Quadratwurzel des Verhältnisses (L/C) der Induktivität (L) der Primärwicklung (7) zur Kapazität (C) des Resonanzkondensators (9) festgelegt ist, und daß das Verhältnis der Einschaltzeitdauer ($T_{on}$) zu einem Zyklus der Schaltperiod (T) des Schaltelements (10) zwischen 0,05 und 0,5 liegt.

3. Gerät zur Erzeugung einer hohen Gleichspannung nach Anspruch 1 oder 2, dadurch gekennzeichnet, daß jeweils ein positiver und ein negativer Lastanschluß (15a, 15b) mit einem Anodenanschluß bzw. Kathodenanschluß einer Röntgenstrahlröhre verbunden sind.

## Revendications

1. Appareil générateur de haute tension continue, comprenant:

un transformateur (6) possédant un enroulement primaire (7) connecté à une source d'alimentation en puissance alternative et une pluralité de $n$ enroulements secondaures ($8_1$ à $8_n$);

un premier circuit redresseur (13) possédant plusieurs éléments redresseurs ($13_1$ à $13_{n+1}$) connectés en série dans le même sens de polarité;

un deuxième circuit redresseur (14) possédant plusieurs éléments redresseurs ($14_1$ à $14_{n+1}$) connectés de la même manière et dans le même sens que les éléments redresseurs du premier circuit redresseur, les éléments redresseurs du premier et du deuxième circuit redresseur étant disposés en correspondance biunivoque afin de former des paires d'éléments redresseurs ($13_1$ et $14_1$, ..., $13_{n+1}$ et $14_{n+1}$) d'étages allant d'un premier étage à un $(n+1)^{ème}$ étage.

une borne de charge positive (15a) connectée aux cathodes de la paire d'éléments redresseurs ($13_1$ et $14_1$) dudit premier étage; et

une borne de charge négative (15b) connectée dux anodes de la paire d'éléments redresseurs ($13_{n+1}$ et $14_{n+1}$) dudit $(n+1)^{ème}$ étage;

chacun desdits enroulements secondaires étant connecté entre les anodes d'une paire correspondante d'éléments redresseurs sauf entre la paire d'éléments redresseurs dudit $(n+1)^{ème}$ étage, avec des polarités s'inversant alternativement;

caractérisé en ce que ladite source d'alimentation en puissance alternative comprend une source d'alimentation en puissance continue (11) connectée par une première extrémité à une première extrémité (7a) dudit enroulement primaire (7) via un élément de commutation (10) qui est périodiquement rendu conducteur et non conducteur, et, par son autre extrémité, à l'autre extrémité (7b) dudit enroulement primaire (7); un condensateur résonant (9) connecté aux bornes dudit enroulement primaire; et une diode d'amortissement (12) connectée par son anode à ladite première extrémité (7a) dudit enroulement primaire et, par sa cathode, à ladite première extrémité de ladite source d'alimentation en puissance continue.

2. Appareil générateur de haute tension continue selon la revendication 1, caractérisé en ce qu'une impédance caractéristique est comprise entre 0,5 et 500 ohms, ladite impédance caractéristique ($Z_o$) étant définie de façon à être égale à la racine carrée du rapport (L/C) de l'inductance (L) dudit enroulement primaire (7) à la capacité (C) dudit condensateur résonant (9), et en ce que le rapport de la période de conduction ($T_{on}$) à un cycle de la période de commutation (T) dudit élément de commutation (10) s'étend de 0,05 à 0,5.

3. Appareil générateur de haute tension continue selon la revendication 1 ou 2, caractérisé en ce que lesdites bornes de charge positive et négative (15a, 15b) sont respectivement connectées aux bornes d'anode et de cathode d'un tube à rayons X.

0 1 0 6  4 8 2

F I G. 1

F I G. 2

1

F I G. 3

(a)

(b)

(c)

(d)

(e)

(f)